Europäisches Patentamt

European Patent Office

Office européen des brevets

(19)

(11) Numéro de publication : **0 122 161**
**B1**

(12) **FASCICULE DE BREVET EUROPÉEN**

(45) Date de publication du fascicule du brevet :
15.06.88

(51) Int. Cl.⁴ : **B 62 K 25/24, B 62 K 21/00**

(21) Numéro de dépôt : 84400035.6

(22) Date de dépôt : 09.01.84

(54) Dispositif de suspension et de direction de roue avant de motocycle.

(30) Priorité : 13.01.83 FR 8300649

(43) Date de publication de la demande :
17.10.84 Bulletin 84/42

(45) Mention de la délivrance du brevet :
15.06.88 Bulletin 88/24

(84) Etats contractants désignés :
AT BE CH DE GB IT LI LU NL SE

(56) Documents cités :
DE-C- 82 960
FR-A- 2 418 742
FR-A- 2 431 416
FR-A- 2 447 849
GB-A- 2 021 496
GB-A- 2 049 578
US-A- 4 179 135

(73) Titulaire : Bruneau, Jean-Bertrand
36, rue Montesquieu
F-72000 Le Mans (FR)

(72) Inventeur : Bruneau, Jean-Bertrand
36, rue Montesquieu
F-72000 Le Mans (FR)

## Description

La présente invention concerne un véhicule motorisé à deux roues tel que motocyclette ou autre véhicule analogue attelé ou non d'un side-car.

Dans ce type de véhicule, les fonctions de direction et de suspension AV sont généralement remplies simultanément par une fourche de type télescopique le plus souvent ou de fourche à balancier de type Earles ou autre, avec l'inconvénient d'entraîner une grande inertie de la direction et d'importantes variations d'empattement lors du débattement de la suspension.

D'autres systèmes, depuis le moyeu directionnel de Di Fazio, tentent de dissocier ces deux fonctions, en ayant recours pour la suspension à deux bras ou triangles ou fourche oscillante superposés, et pour la direction à un dispositif actionnant le pivot par l'intermédiaire d'une ou plusieurs biellettes.

Le système à deux triangles superposés positionnés au-dessus de la roue connu dans la fabrication des motocycles présente l'inconvénient de rehausser le centre de gravité, d'être encombrant, et d'être très délicat quant au choix de l'épure à cause de l'important bras de levier constitué par le porte-fusée en fourche. Le FR-A-2 431 416 décrit un tel système qui correspond au préambule de la revendication 1.

Quant au système à bras latéraux, il présente l'inconvénient d'être très encombrant latéralement pour compenser leur manque de rigidité, d'être asymétrique au niveau de l'axe longitudinal de la motocyclette, d'avoir un système de direction lourd et encombrant, de ne permettre que de faibles modifications d'épures, les articulations des bras étant obligatoirement situées derrière la roue.

Le système de roue articulée en son centre sur une fourche oscillante et sur un triangle au-dessus de la roue présente l'inconvénient d'un démontage très compliqué et très long de la roue AV, et de ne présenter qu'un point d'articulation inférieur très peu rigide.

La présente invention a pour objet de remédier à tous ces inconvénients, ce but étant atteint grâce aux caractéristiques de la revendication 1.

En position fermée, cette pièce définit donc en gros un triangle s'inscrivant dans la roue. Le pivot de roue peut être latéral à la roue ou bien en fourche de chaque côté de la roue et sera donc articulé sur un point inférieur décrit précédemment et sur un point supérieur qui peut être soit réalisé selon le même schéma, c'est-à-dire dans le moyeu de la roue traversant celui-ci, soit être le sommet d'un bras latéral à la roue, soit de façon préférentielle être le sommet d'un triangle positionné au-dessus de la roue.

Cette suspension AV comprend un combiné ressort-amortisseur qui peut être fixé au triangle supérieur au-dessus de celui-ci, soit actionné par l'intermédiaire de biellettes et de renvois, soit de façon préférentielle le triangle supérieur peut faire office de basculeur.

Quant à la direction, elle est indépendante du système de suspension.

Le système de freinage est lié au pivot.

L'avantage du système selon l'invention est d'être constitué de pièces qui travaillent de façon simple, donc légère et rigide, de permettre une dépose très facile de la roue par deux opérations simples, de permettre une grande liberté de choix au niveau des épures de suspension (notamment pour le choix du centre instantané de rotation du centre de la roue AV, et pour la recherche de la réaction d'antiplongée au freinage), de ne présenter lors du débattement de la suspension que des variations d'empattement très limitées, d'abaisser le centre de gravité, d'être peu encombrant car très bien intégré à la motocyclette, d'offrir un rapport de symétrie compatible avec le caractère du véhicule à deux roues, de présenter un système de direction très compact, d'offrir des points de guidage supérieur et inférieur très précis car en forme de triangle et espacés l'un de l'autre, de dégager tout l'avant au-dessus de la roue, et donc de permettre un abaissement du maître-couple et un affinement du coefficient de trainée.

Les caractéristiques et avantages du mode de réalisation de l'invention seront mis en évidence par la description qui sera donnée ci-après, uniquement à titre d'exemple non limitatif.

La figure 1 est une vue de profil d'un train AV selon l'invention.

La figure 2 est une vue éclatée de l'ensemble pivot-fusée.

La figure 3 est une vue schématique en perspective de la suspension et de la direction sans le frein avant et sans la roue.

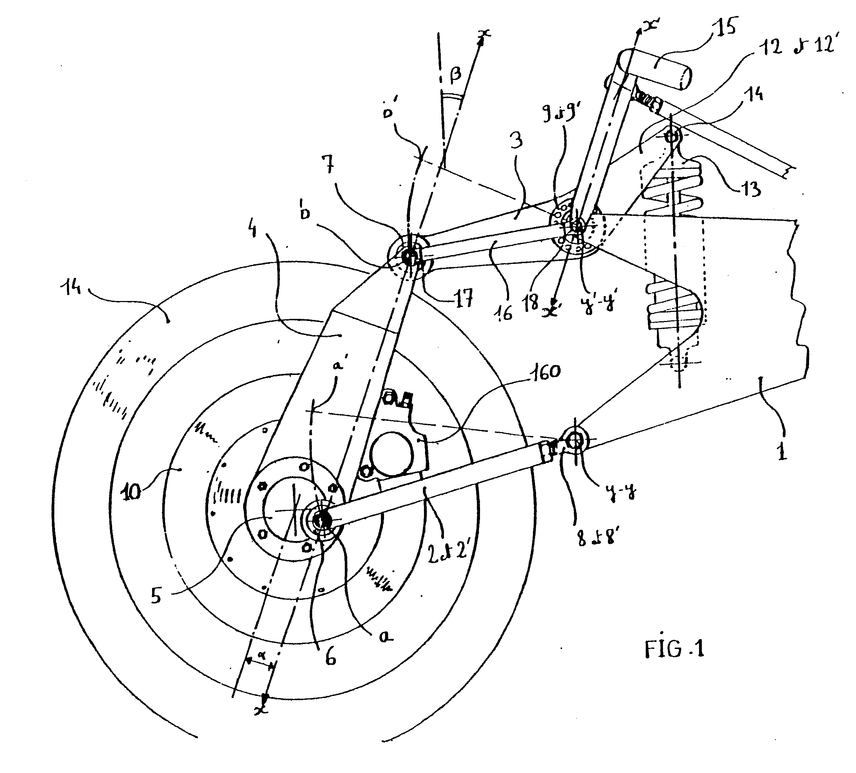

En se reportant tout d'abord sur la figure 1, on voit le châssis de la moto 1 dans sa partie AV constitué d'un assemblage de platines, de tubes, de pièces mécano-soudées ou de tout autre système, sur lesquels viennent s'articuler deux ensembles superposés 2 et 3, représentés sur la figure 1 en position repos de la suspension, chacun en deux points 8, 8', 9 et 9' et selon un axe horizontal yy, y'y' et symétriquement par rapport à l'axe longitudinal du motocycle. L'ensemble supérieur, dans le schéma décrit sur cet exemple, est constitué d'un caisson mécano-soudé en forme de triangle qui possède une rotule 7 à son sommet (le pivot) et deux roulements 9 et 9' à sa base (articulation supérieure du châssis). A la base de ce triangle viennent se fixer deux platines 12 et 12' qui commandent l'amortisseur 13 sur l'axe 14. Lors du fonctionnement de la suspension, la révolution décrite par le mouvement de ce point 14 est donc inverse de celle du point b.

L'ensemble inférieur est constitué selon l'invention par deux bras 2 et 2' possédant chacun leur articulation 8 et 8' sur deux points du châssis disposés horizontalement et symétriques par rapport à l'axe longitudinal du motocycle. Ces deux bras 2 et 2' se réunissent en un point situé à l'intersection du sommet formé par ces deux bras avec l'axe de pivotement xx par une vis ou autre.

Des portées prévues au bout de chaque bras 2 et 2' viendront prendre en pince la rotule 6 supportée par la fusée fixe 5 en formant l'articulation inférieure. La position du point a dans la fusée fixe 5 détermine la valeur du déport α. Cette fusée fixe sera réunie par un ensemble de vis à un bras latéral 4, constituant le pivot de roue 4 et 5. L'articulation supérieur b sera, elle, assurée par un embout déporté 101 du bras latéral 4 qui vient s'emboîter dans la rotule 7 supportée par le triangle monobloc ou non supérieur 3.

Lors du mouvement de la suspension contrôlé par l'amortisseur 13, les points a et b décriront une révolution selon respectivement les axes d'articulation yy et y'y' jusqu'aux points a' et b' correspondant à l'enfoncement maximum de l'amortisseur 13.

En ce qui concerne l'originalité de la direction, le pivot de roue 4 et 5 pivote autour de l'axe xx grâce à ses rotules 6 et 7 avec les ensembles de suspension. L'orientation de cet axe par rapport à la verticale détermine l'angle de chasse β. L'articulation de ce pivot 4 et 5 est contrôlée par un guidon 15 possédant son propre axe d'articulation x'x', en gros parallèle à l'axe xx, celui-ci étant relié au pivot 4 par une biellette 16 articulée à ses deux extrémités par les rotules 17 et 18.

Le freinage est assuré sur le schéma par un frein à disque. L'étrier 160 est solidaire du bras 4, le disque 10 est, lui, lié à la fusée tournante 107.

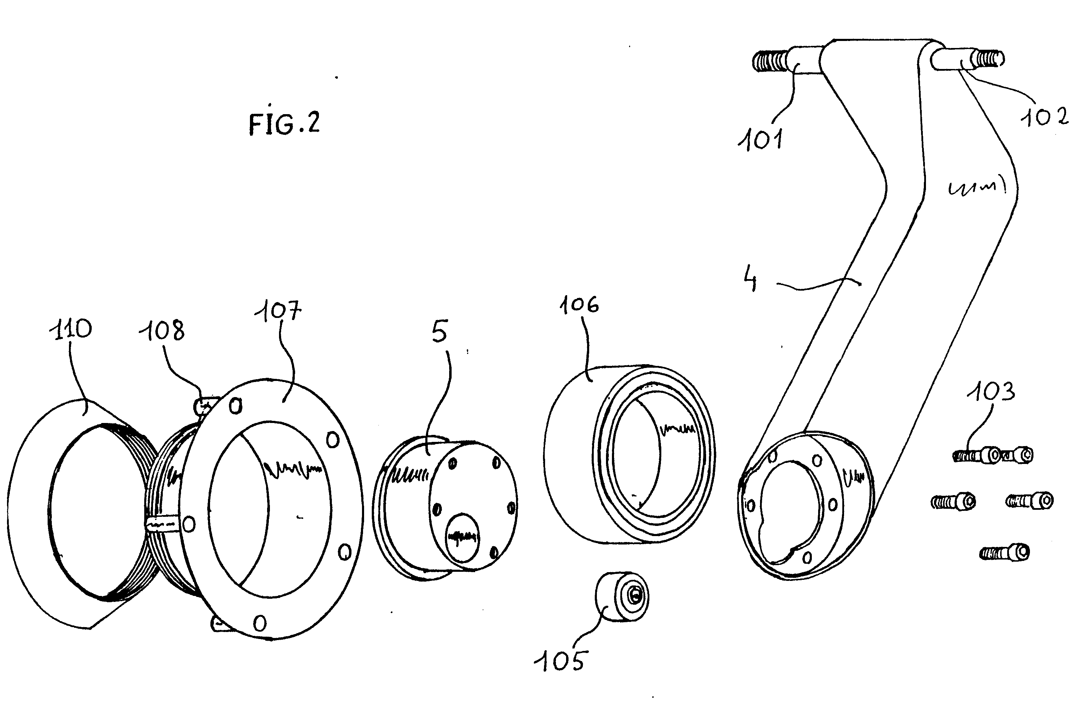

La figure 2 illustre l'ensemble de guidage de la roue ; le bras 4 possède à sa partie supérieure deux embouts 101 et 102 sur lesquels viennent s'emboîter la rotule du triangle supérieur d'un côté et la biellette de direction de l'autre, à sa partie inférieure une face usinée permettant de le fixer au porte-rotule ou fusée fixe 5 par des vis 103 dans les trous taraudés 104. Cette fusée fixe 5 supporte à l'intérieur une rotule 105 et à l'extérieur les roulements de roue 106. Sur la bague extérieure du roulement 106 s'ajuste le porte-roue ou fusée tournante 107. Sur ce porte-roue on trouve des tétons 109 qui assurent l'entraînement de la roue 14 et du disque 10 et la bague 110 qui une fois vissée sur l'arbre 107 maintient la roue.

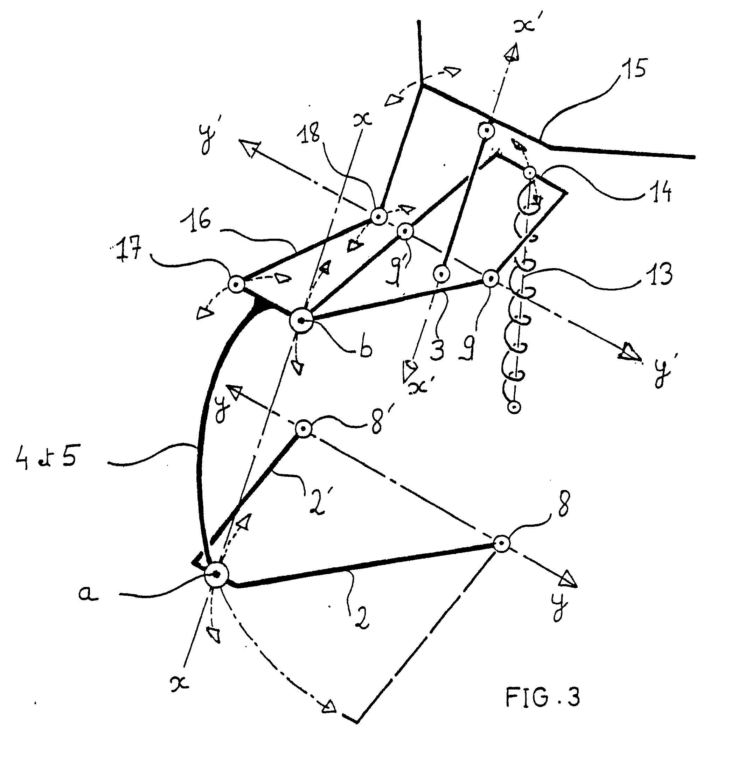

La figure 3 illustre en perspective le fonctionnement de l'ensemble selon la description de la figure 1. De même est figuré en pointillé le bras inférieur 2 en position désaccouplée. Après démontage de la vis réunissant les bras 2 et 2', le bras 2 s'ouvre latéralement en se désolidarisant du bras 2'. Après dépose de la bague de fixation 110, la roue se démonte latéralement.

Le système décrit présente donc l'avantage d'être compact, d'un fonctionnement simple et facilement maîtrisable, ce qui le rend applicable à l'utilisation sur les motocycles de série.

## Revendications

1. Dispositif de suspension et de direction de roue avant de véhicule motorisé à deux roues 1, dont le train avant est constitué d'un bras ou pivot de roue 4 supportant la fusée 5, la roue avant 14 et la biellette de direction 16, ledit bras 4 étant articulé respectivement en deux points a et b, au sommet de deux ensembles oscillants superposés 2 et 3, chacun articulé horizontalement par leur base au châssis (selon les axes yy et y'y') l'un ou l'autre supportant le mécanisme de suspension 13, caractérisé en ce que l'un au moins de ces deux ensembles est construit en deux parties 2 et 2' positionnées de chaque côté de la roue 14, ledit ensemble étant articulé au bras 4 par une rotule 6, fixée dans la fusée 5, lesdites deux parties se réunissant en leur sommet et ainsi traversant la roue 14 par ladite rotule 6, ce dit ensemble une fois assemblé formant une pièce rigide de sorte que la rotule 6 ne pourra plus décrire qu'un arc de cercle selon l'axe yy ou y'y' déterminé par la fixation de cet ensemble 2 et 2' au châssis et dans le plan perpendiculaire à ce même axe.

2. Dispositif selon la revendication 1, caractérisé en ce que le point d'articulation a ou b (ou les deux points a et b) du pivot avec le triangle n'est pas situé obligatoirement au centre géométrique de la roue mais en un point quelconque choisi de la fusée fixe 5.

3. Dispositif selon la revendication 1 caractérisé en ce qu'un seul des deux bras du triangle 2 ou 2' peut être articulé latéralement lors de l'ouverture de celui-ci (en plus du mouvement selon un axe horizontal).

4. Dispositif selon la revendication 1 caractérisé en ce que la localisation d'un point d'articulation a ou b du pivot par un système selon l'invention peut être associée au niveau de la localisation de l'autre point d'articulation a ou b par un autre système selon l'invention dans le moyeu de la roue 14 ou par un triangle 3 positionné au-dessus de la roue, ou par un bras latéral à la roue.

5. Dispositif selon la revendication 1 caractérisé en ce que les ensembles de guidage 2 et 3 peuvent être rattachés directement au moteur du motocycle entraînant dans ce cas la suppression du cadre.

6. Dispositif selon la revendication 1 caractérisé en ce que le bras de liaison 4 des deux ensembles oscillants superposés 2 et 3 peut être latéral à la roue ou prendre celle-ci en fourche.

## Claims

1. A front wheel suspension and steering device for a two-wheel vehicle consisting of a wheel pivot or wheel arm 4 which supports the spindle 5, the front wheel 14 and the steering rod 16, the said arm having two pivot points a and b connecting respectively to the apex of two superposed suspension members 2 and 3, each connecting horizontally by their base to the frame (according to the axes yy and y'y') and either supporting the damper unit 13, with the characteristic that one at least of the two members is constructed with two arms 2 and 2' which are positionned on each side of the wheel 14 by the ball 6, which is fixed inside the spindle 5, the said arms joining at their apex and connecting to the wheel 14 by the said ball 6 ; once assembled, the said member forms a rigid part so that the ball 6 will only be able to describe a circular arc according to the axis yy or y'y', which is determined by the fixation ot the two arms 2 and 2' to the frame, and within the plan being perpendicular to that axis.

2. A device according to claim 1 which is characterized in that the pivot point a or b (or both points a and b), connecting the pivot arm 4 to the triangle, is not necessarily located at the geometrical centre of the wheel but in any chosen part of the fixed spindle 5.

3. A device according to claim 1 which is characterized in that one only of the two arms 2 or 2' of the triangle can pivot for steering purposes (in addition to its movement with respect to an horizontal axis).

4. A device according to claim 1 which is characterized in that the location of the pivot point a or b on the pivot arm is performed by a system according to the invention and that the location of the other pivot point a or b can also be performed by a system according to the invention, that is across the hub of the wheel 14 or, alternatively, by a triangle positionned above the wheel, or by an arm lateral to the wheel.

5. A device according to claim 1 which is characterized in that the guiding members 2 and 3 can be connected directly to the engine of the motorcycle, thus suppressing the frame.

6. A device according to claim 1 which is characterized in that the front arm 4 linking the superposed swinging members 2 and 3 can be lateral to the wheel or divide into two forks on each side of the wheel.

**Patentansprüche**

1. Aufhänge- und Lenkvorrichtung des Vorderrades eines Zweiradmotorfahrzeuges 1, dessen Vordergestell aus einem Arm oder Radträger 4 besteht, welcher den Achsschenkel 5, das Vorderrad 14 und den Lenkschwingarm 16 trägt, wobei der genannte Arm jeweils in zwei Punkten a und b schwenkbar gelagert ist, und zwar an der Spitze von zwei übereinander liegenden Schwingsystemen 2 und 3, jedes waagerecht durch seine Basis zum Rahmengestell (nach den Achsen yy und y'y') gegliedert, wobei das eine oder das andere die Aufhängevorrichtung 13 trägt, dadurch gekennzeichnet, dass wenigstens eines dieser zwei Systeme aus zwei auf jeder Seite des Rades 14 liegenden Teilen 2 und 2' gebaut ist, wobei das genannte System am Arm 4 durch ein im Achsschenkel 5 eingebautes Kugelgelenk 6 beweglich gelagert ist, wobei die genannten zwei Teile sich in ihrer Spitze verbinden und dadurch das Rad 14 durch das genannte Kugelgelenk 6 durchqueren, wobei dieses genannte System nach dem Zusammenbau einen starren Teil bildet, sodass das Kugelgelenk 6 nur noch einen Kreisbogen nach der Achse yy oder y'y', welche durch die Befestigung dieses Systems 2 und 2' am Rahmen bestimmt wird, und in der zu dieser Achse senkrechten Ebene beschreiben kann.

2. Vorrichtung nach Anspruch 1, dadurch gekennzeichnet, dass der Gelenkpunkt a oder b (oder beide Punkte a und b) des Radträgers mit dem Dreieck nicht unbedingt am geometrischen Zentrum des Rades liegt, sondern in einem beliebig gewählten Punkt des Achsschenkels 5.

3. Vorrichtung nach Anspruch 1, dadurch gekennzeichnet, dass nur einer der zwei Arme des Dreiecks 2 oder 2' bei dessen Öffnung sich seitwärts bewegen kann (ausser der Bewegung nach einer waagerechten Achse).

4. Vorrichtung nach Anspruch 1, dadurch gekennzeichnet, dass die Festlegung eines Gelenkpunktes a oder b des Radträgers durch ein erfindungsgemässes System ausgeführt wird, und dass die Festlegung des anderen Gelenkpunktes a oder b durch ein weiteres erfindungsgemässes System in der Radnabe 14 ausgeführt werden kann, oder durch ein über dem Rad liegendes Dreieck 3 oder durch einen zum Rad lateral liegenden Arm.

5. Vorrichtung nach Anspruch 1, dadurch gekennzeichnet, dass die Lenkungssysteme 2 und 3 unmittelbar am Motor des Kraftrades angeschlossen werden können, wobei in diesem Fall der Rahmen weggelassen werden kann.

6. Vorrichtung nach Anspruch 1, dadurch gekennzeichnet, dass der Verbindungsarm 4 der zwei übereinander liegenden Schwingsysteme 2 und 3 entweder seitlich vom Rad oder gabelförmig liegen kann.

FIG.1

FIG.2

FIG.3